# EUROPÄISCHE PATENTSCHRIFT

(11) **EP 0 718 510 B1**
(45) Veröffentlichungstag und Bekanntmachung des Hinweises auf die Patenterteilung: **17.03.1999**
(21) Anmeldenummer: 95890201.7
(22) Anmeldetag: 09.11.1995
(51) Int. Cl.: F16B 39/284, F16B 37/00

(54) **Mutter für eine Befestigungseinrichtung**
Nut for a fixing device
Ecrou pour un élément de fixation

(30) Priorität: 24.11.1994 AT 2184/94
(43) Veröffentlichungstag der Anmeldung: 26.06.1996
(73) Patentinhaber: KINGNUT Befestigungstechnologie GmbH, 1050 Wien (AT)
(72) Erfinder: Wedenig, Harald, Dipl.Ing., A-8641 St. Marein/Mürztal (AT)
(74) Vertreter: Atzwanger, Richard, Dipl.-Ing. Patentanwalt

(56) Entgegenhaltungen:
- EP-A- 0 465 288
- US-A- 4 990 044
- US-A- 5 302 070

## Beschreibung

Die gegenständliche Erfindung betrifft eine Mutter für eine Befestigungseinrichtung, welche aus einem mit einem Gewinde ausgebildeten Bolzen und einer mit dem Bolzen zusammenwirkenden Mutter besteht und welche aus einem aus hartelastischen Material, insbesondere aus Kunststoff, gefertigten kreiszylinderartigen bzw. prismaartigen Hohlkörper gebildet ist, von dessen Innenwandung mindestens ein schräg zur Achse ausgerichteter Vorsprung, welcher mit dem Hohlkörper einstückig ist, nach innen abragt, wobei dessen freier Rand mit dem Gewinde des Bolzens zusammenwirkt, wodurch der Gewindebolzen gegenüber der Mutter unter elastischer Verformung des mindestens einen Vorsprunges einerseits in einer Richtung axial verschiebbar sowie andererseits gegenüber der Mutter verdrehbar ist und zwischen dem Gewindebolzen und der Mutter in axialer Richtung eine Kraft übertragbar ist.

Ein derartige Mutter ist aus US-A-5 302 070 bekannt.

Bekannte Muttern für derartige Befestigungseinrichtungen sind insoferne nicht den Anforderungen entsprechend, da sie eine Mehrzahl von Bestandteilen aufweisen, weswegen sie einerseits in ihrer Herstellung sehr teuer sind und andererseits ihre Funktionssicherheit nicht gewährleistet ist. Bei derartigen Muttern besteht weiters das Erfordernis, den mindestens einen Vorsprung elastisch nachgiebig auszubilden, um den Gewindebolzen an diesem vorbeischieben zu können. Durch diese Elastizität wird jedoch die Haltekraft bzw. Auszugsfestigkeit dieses Vorsprunges stark vermindert.

Der gegenständlichen Erfindung liegen demnach die Aufgaben zugrunde, eine Mutter für eine Befestigungseinrichtung zu schaffen, welche aus möglichst wenigen Bestandteilen besteht, wodurch sie in der Herstellung billig ist und welche weiters ungeachtet der Elastizität des mindestens einen Vorsprunges eine große Auszugsfestigkeit gewährleistet. Dies wird erfindungsgemäß dadurch erzielt, daß der mindestens eine Vorsprung mit einem axial abragenden Fortsatz ausgebildet ist, welcher sich bis etwa in die Ebene der Anlagefläche der Mutter auf den anliegenden Bauteil erstreckt.

Vorzugsweise ist der mindestens eine Vorsprung auch mit zumindest je einem radial abragenden Fortsatz ausgebildet, der das Wegbiegen des Vorsprunges von der Mittelachse dadurch begrenzt, daß der Vorsprung an die Innenwandung des Hohlkörpers zur Anlage kommt. Weiters kann der Fortsatz auch an seiner Innenseite mit einem Vorsprung, insbesondere mit einer axial verlaufenden Rippe, ausgebildet sein, durch welche der Schraubbolzen geführt ist. Der mindestens eine Vorsprung kann mit der Achse des Hohlkörpers einen Winkel von 10° bis 50°, insbesondere einen Winkel von etwa 30°, einschließen. Weiters kann der mindestens eine Vorsprung am freien Ende mit einer Rippe nach Art eines Teiles eines Gewindeganges ausgebildet sein.

Eine derartige Mutter kann aus einem thermoplastischen Material, aus einem elastomeren Material, aus einem duromeren Material, aus einem faserverstärkten Kunststoff, aus einem partikelverstärkten Polymermaterial oder aus einem partikel- und bzw. oder faserverstärkten Polymermaterial gefertigt sein.

Eine Befestigungseinrichtung, welche aus einem mit einem Gewinde ausgebildeten Bolzen und einer Mutter besteht, wobei die Mutter durch einen mit einer Bohrung ausgebildeten Bauteil gebildet ist, wobei von der Innenwandung der Bohrung mindestens ein schräg zur Achse ausgerichteter Vorsprung, insbesondere ein konisch ausgebildeter Ring, welcher mit dem Bauteil einstückig ist, nach innen abragt und dessen freier Rand mit dem Gewinde des Bolzens zusammenwirkt, wodurch der Schraubbolzen gegenüber der Mutter unter elastischer Verformung des Rastelementes in einer Richtung axial verschiebbar und gegenüber der Mutter verdrehbar ist und zwischen dem Schraubbolzen und der Mutter in axialer Richtung eine Kraft übertragbar ist, ist erfindungsgemäß dadurch gekennzeichnet, daß der mindestens eine Vorsprung mit einem axial abragenden Fortsatz ausgebildet ist, welcher sich bis etwa in die Ebene der Anlagefläche der Mutter auf den anliegenden Bauteil erstreckt.

Der Gegenstand der Erfindung ist nachstehend anhand eines in der zeichnung dargestellten Ausführungsbeispieles näher erläutert. Es zeigen:
- Fig. 1: eine bevorzugte Ausführungsform einer erfindungsgemäßen Mutter, in Draufsicht, und
- Fig. 2: diese Mutter, im Schnitt, nach der Linie II-II der Fig.1.

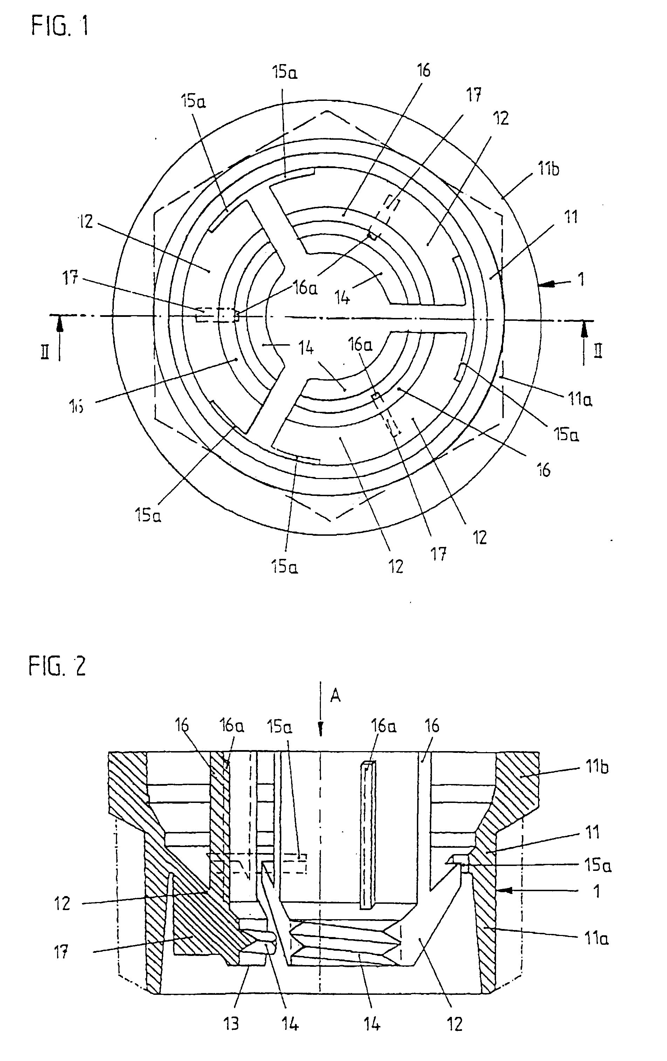

Die in den Fig. 1 und 2 dargestellte Mutter 1 besteht aus einer Hülse 11, deren Außenmantel 11a als Sechskant ausgebildet ist. An einem ihrer Ränder ist diese Hülse 11 als Rändelschraube 11b ausgebildet. Von der Innenwand der Hülse 11 ragen drei Vorsprünge 12 ab, welche sich zu einem konisch ausgebildeten Ring ergänzen. An ihren freien Enden 13 sind die Vorsprünge 12 mit Rippen 14 ausgebildet, welche Teile eines Ganges eines Innengewindes bilden.

Die Vorsprünge 12 sind mit nach oben abragenden, der Abstützung dienenden, angenähert in Umfangsrichtung verlaufenden Fortsätzen 16 und mit nach außen ragenden, angenähert radial ausgerichteten, der Begrenzung der Ausbiegung der Vorsprünge 12 dienenden Fortsätzen 17 ausgebildet. Weiters sind an der Innenseite der Fortsätze 16 Rippen 16a vorgesehen, welche zur Führung der Schraubbolzen dienen. Der mindestens eine Vorsprung 12 schließt mit der Achse des Hohlkörpers 11 einen Winkel von 10° bis 50°, insbesondere einen Winkel von etwa 30°, ein.

Da die Verbindungen der Vorsprünge 12 mit der Innenwandung der Hülse 11 mit Schlitzen 15a ausgebildet sind, ist die erforderliche Elastizität der Vorsprünge 12 gewährleistet, um das Verrasten der den Gewindegängen entsprechenden Rippen 14 mit dem Gewindebolzen, welcher in die Mutter eingeschoben wird, zu bewirken. Zudem kann die Wandstärke der Anbindung des mindestens einen Vorsprunges 12 deutlich geringer als dessen Wandstärke sein, wobei sie insbesondere angenähert die halbe Wandstärke aufweist.

Eine erfindungsgemäße Mutter kann auch einen integralen Bestandteil eines Bauelementes darstellen. Dabei braucht sie dann nicht als kreiszylinderartiger oder prismaartiger Hohlkörper ausgebildet zu sein, sondern ist sie nur mit einer Innenwandung ausgebildet, von welcher mindestens ein sich konisch verjüngender, allenfalls mehrteiliger Vorsprung abragt, dessen freies Ende mit einem Schraubbolzen zusammenwirkt.

Eine derartige Mutter kann aus einem thermoplastischen Material, aus einem elastomeren Material, aus einem duromeren Material, aus einem faserverstärkten Kunststoff, aus einem partikelverstärkten Polymermaterial oder aus einem partikel- und bzw. oder faserverstärkten Polymermaterial gefertigt sein. Dabei können die Fasern ausschließlich oder bevorzugt in axialer Richtung angeordnet sein.

Die Verwendung ist derart, daß ein Schraubbolzen in Richtung des Pfeiles A eingeschoben wird. Da die Vorsprünge 12 elastisch auseinander federn, kann der Schraubbolzen an den Rippen 14 vorbeigeschoben werden, bis er an demjenigen Bauteil, welcher befestigt werden soll, zur Anlage kommt. Hierauf rasten die Rippen 14, welche nach Art eines Gewindeganges ausgebildet sind, in das Gewinde des Schraubbolzens ein. Sobald dieser verdreht wird, wird der Bauteil befestigt. Da durch die axialen Fortsätze 16 eine Abstützung der Vorsprünge 12 bewirkt wird, weist diese Mutter eine sehr große Auszugsfestigkeit bzw. Haltekraft auf.

Vorzugsweise sind die Vorsprünge an ihrem freien Ende miteinander durch eine durchgehende Leiste verbunden. Sobald die Mutter verwendet wird, wird diese Leiste aufgebrochen. Hierdurch ist jederzeit erkennbar, ob die Mutter neu ist oder ob sie allenfalls schon verwendet worden ist.

Eine Befestigungseinrichtung selbst kann aus einem mit einem Gewinde ausgebildeten Bolzen und einer Mutter bestehen, wobei die Mutter durch einen mit einer Bohrung ausgebildeten Bauteil gebildet ist und von der Innenwandung der Bohrung mindestens ein schräg zur Achse ausgerichteter Vorsprung, insbesondere ein konisch ausgebildeter Ring, welcher mit dem Bauteil einstückig ist, nach innen abragt. Der freie Rand des Ringes wirkt mit dem Gewinde des Bolzens zusammen, wodurch der Schraubbolzen gegenüber der Mutter unter elastischer Verformung des Rastelementes in einer Richtung axial verschiebbar und gegenüber der Mutter verdrehbar ist. Hierdurch ist zwischen dem Schraubbolzen und der Mutter in axialer Richtung eine Kraft übertragbar. Weiters kann der mindestens eine Vorsprung mit einem axial abragenden Fortsatz ausgebildet sein, welcher sich bis etwa in die Ebene der Anlagefläche der Mutter auf den anliegenden Bauteil erstreckt.

## Patentansprüche

1. Mutter (1) für eine Befestigungseinrichtung, welche aus einem mit einem Gewinde ausgebildeten Bolzen und der mit dem Bolzen zusammenwirkenden Mutter (1) besteht und welche aus einem aus hartelastischen Material, insbesondere Kunststoff, gefertigten kreiszylinderartigen bzw. prismaartigen Hohlkörper gebildet ist, von dessen Innenwandung mindestens ein schräg zur Achse ausgerichteter Vorsprung (12), welcher mit dem Hohlkörper einstückig ist, nach innen abragt, wobei dessen freier Rand mit dem Gewinde des Bolzens zusammenwirkt, wodurch der Gewindebolzen gegenüber der Mutter (1) unter elastischer Verformung des mindestens einen Vorsprunges (12) einerseits in einer Richtung axial verschiebbar sowie andererseits gegenüber der Mutter (1) verdrehbar ist und zwischen dem Gewindebolzen und der Mutter (1) in axialer Richtung eine Kraft übertragbar ist, **dadurch gekennzeichnet,** daß der mindestens eine Vorsprung (12) mit einem axial abragenden Fortsatz (16) ausgebildet ist, welcher sich bis etwa in die Ebene der Anlagefläche der Mutter (1) auf ein anliegendes Bauteil erstreckt.

2. Mutter (1) nach Patentanspruch 1, **dadurch gekennzeichnet,** daß der mindestens eine Vorsprung (12) mit zumindest je einem radial abragenden Fortsatz (17) ausgebildet ist, der das Wegbiegen des Vorsprunges (12) von der Mittelachse dadurch begrenzt, daß er an die Innenwandung des Hohlkörpers (11) zur Anlage kommt.

3. Mutter (1) nach einem der Patentansprüche 1 und 2, **dadurch gekennzeichnet,** daß der Fortsatz (16) an seiner Innenseite mit einem Vorsprung, insbesondere einer axial verlaufenden Rippe (16a), ausgebildet ist, durch welche eine Führung des Gewindebolzens bewirkt wird.

4. Mutter (1) nach einem der Patentansprüche 1 bis 3, **dadurch gekennzeichnet,** daß der mindestens eine Vorsprung (12) als konischer, gegebenenfalls mehrfach unterteilter Ring ausgebildet ist.

5. Mutter (1) nach einem der Patentansprüche 1 bis 4, **dadurch gekennzeichnet,** daß der mindestens eine Vorsprung (12) mit der Achse des Hohlkörpers (11) einen Winkel von 10° bis 50°, insbesondere einen Winkel von etwa 30°, einschließt.

6. Mutter (1) nach einem der Patentansprüche 1 bis 5, **dadurch gekennzeichnet,** daß der mindestens eine Vorsprung (12) am freien Ende (13) mit einer Rippe (14) nach Art eines Teiles eines Gewindeganges ausgebildet ist.

7. Mutter (1) nach einem der Patentansprüche 1 bis 6, **dadurch gekennzeichnet,** daß der freie Rand des mindestens einen Vorsprunges (12) längs einer Schraubenlinie verläuft.

8. Mutter (1) nach einem der Patentansprüche 1 bis 7, **dadurch gekennzeichnet,** daß die Wandstärke der Anbindung des mindestens einen Vorsprunges (12) deutlich geringer als dessen Wandstärke ist und angenähert die halbe Wandstärke aufweist.

9. Mutter (1) nach einem der Patentansprüche 1 bis 8, **dadurch gekennzeichnet,** daß die freien Enden (13) der vorsprunge (12) mittels einer an einer Stelle unterbrochenen Leiste miteinander verbunden sind.

10. Mutter (1) nach einem der Patentansprüche 1 bis 9, **dadurch gekennzeichnet,** daß sie aus einem thermoplastischen Material, aus einem elastomeren Material, aus einem duromeren Material, aus einem faserverstärkten Kunststoff, aus einem partikelverstärkten Polymermaterial oder aus einem partikel- und bzw. oder faserverstärkten Polymermaterial gefertigt ist.

11. Mutter (1) nach Patentanspruch 10, **dadurch gekennzeichnet,** daß die Fasern ausschließlich oder bevorzugt in achsialer Richtung angeordnet sind.

12. Befestigungseinrichtung, welche aus einem mit einem Gewinde ausgebildeten Bolzen und einer Mutter (1) besteht, wobei die Mutter (1) durch einen mit einer Bohrung ausgebildeten Bauteil gebildet ist, wobei von der Innenwandung der Bohrung mindestens ein schräg zur Achse ausgerichteter Vorsprung (12), insbesondere ein konisch ausgebildeter Ring, welcher mit dem Bauteil einstückig ist, nach innen abragt und dessen freier Rand mit dem Gewinde des Bolzens zusammenwirkt, wodurch der Schraubbolzen gegenüber der Mutter (1) unter elastischer Verformung des Rastelementes in einer Richtung axial verschiebbar und gegenüber der Mutter (1) verdrehbar ist und zwischen dem Schraubbolzen und der Mutter (1) in axialer Richtung eine Kraft übertragbar ist, dadurch gekennzeichnet, daß der mindestens eine Vorsprung (12) mit einem axial abragenden Fortsatz (16) ausgebildet ist, welcher sich bis etwa in die Ebene der Anlagefläche den Mutter (1) auf ein anliegendes Bauteil erstreckt.

13. Befestigungseinrichtung nach Patentanspruch 12, dadurch gekennzeichnet, daß der als Mutter (1) wirkende Bauteil eine Ausbildung gemäß einem der Patentansprüche 1 bis 11 aufweist.

## Claims

1. A nut (1) for a fastening device which comprises a threaded bolt and the nut (1) interacting with the bolt and which takes the form of a circular cylinder-type or prism-type hollow body made of a hard elastic material, especially plastics material, from the inner wall of which there protrudes inwards at least one projection (12), which is inclined in relation to the axis and in one piece with the hollow body and whose free edge interacts with the thread of the bolt, whereby the threaded bolt may, on the one hand, be displaced axially in one direction with respect to the nut (1), thereby causing elastic deformation of the at least one projection (12), and, on the other hand, be turned with respect to the nut (1) and whereby a force may be transmitted in the axial direction between the threaded bolt and the nut (1), characterised in that the projection (12), of which there is at least one, is constructed with an axially protruding extension (16) which extends as far as approximately into the plane of that face of the nut (1) which bears on an adjacent component.

2. A nut (1) according to claim 1, characterised in that each projection (12), of which there is at least one, is constructed with at least one radially protruding extension (17), which, by coming to rest against the inner wall of the hollow body (11), defines the degree to which the projection (12) may bend away from the central axis.

3. A nut (1) according to either one of claims 1 and 2, characterised in that the extension (16) is constructed on its inside with a projection, especially an axially extending rib (16a), by means of which guidance of the threaded bolt is achieved.

4. A nut (1) according to any one of claims 1 to 3, characterised in that the projection (12), of which there is at least one, takes the form of a conical, optionally multiply subdivided ring.

5. A nut (1) according to any one of claims 1 to 4, characterised in that the projection (12), of which there is at least one, form an angle of from 10° to 50°, especially an angle of approximately 30°, with the axis of the hollow body (11).

6. A nut (1) according to any one of claims 1 to 5, characterised in that the projection (12), of which there is at least one, is constructed at its free end (13) with a rib (14) in the manner of part of a thread turn.

7. A nut (1) according to any one of claims 1 to 6, characterised in that the free edge of the at least one projection (12) follows a helical course.

8. A nut (1) according to any one of claims 1 to 7, characterised in that the wall thickness of the tie portion of the at least one projection (12) is markedly less than the wall thickness of the latter and amounts to approximately half the wall thickness.

9. A nut (1) according to any one of claims 1 to 8, characterised in that the free ends (13) of the projections (12) are connected together by means of a strip discontinuous at one point.

10. A nut (1) according to any one of claims 1 to 9, characterised in that it is made of a thermoplastic material, an elastomeric material, a thermosetting plastic, a fibre-reinforced plastic, a particle-reinforced polymeric material or a particle- and/or fibre-reinforced polymeric material.

11. A nut (1) according to claim 10, characterised in that the fibres are arranged exclusively or preferably in the axial direction.

12. A fastening device, which comprises a threaded bolt and a nut (1), the nut (1) consisting of a component containing a bore, from the inner wall of which bore there protrudes inwards at least one projection (12), especially a ring of conical construction, which is inclined in relation to the axis and in one piece with the component and whose free edge interacts with the thread of the bolt, whereby the screw bolt may be displaced axially in one direction with respect to the nut (1), thereby causing elastic deformation of the catch member, and be turned with respect to the nut (1) and whereby a force may be transmitted in the axial direction between the screw bolt and the nut (1), characterised in that the projection (12), of which there is at least one, is constructed with an axially protruding extension (16) which extends as far as approximately into the plane of that face of the nut (1) which bears on an adjacent component.

13. A fastening device according to claim 12, characterised in that the component acting as the nut (1) is constructed according to any one of claims 1 to 11.

## Revendications

1. Ecrou (1) pour un dispositif de fixation, qui est constitué d'un boulon présentant un filetage et de l'écrou (1) coopérant avec le boulon et qui est formé dans un corps creux cylindrique circulaire ou prismatique, fabriqué dans une matériau élastique dur, en particulier en matière synthétique, de la paroi intérieure duquel dépasse vers l'intérieur au moins une saillie (12) dirigée obliquement vers l'axe qui est réalisée d'un seul tenant avec le corps creux, son bord libre coopérant avec le filetage du boulon, ce qui fait que le boulon fileté peut d'une part coulisser axialement dans un sens par rapport à l'écrou (1), par déformation élastique de la ou des saillie(s) (12) et peut d'autre part tourner par rapport à l'écrou (1) et une force est transmissible dans la direction axiale entre le boulon fileté et l'écrou (12), caractérisé en ce que la ou les saillie(s) (12) présente(nt) un prolongement (16) dépassant axialement, qui s'étend à peu près jusque dans le plan de la surface d'application de l'écrou (1) sur un composant adjacent.

2. Ecrou (1) selon la revendication 1, caractérisé en ce que la ou les saillie(s) (12) présente(nt) au moins un prolongement (17) dépassant radialement qui limite la flexion de la saillie (12) l'éloignant de l'axe médian, en ce qu'il vient s'appliquer contre la paroi intérieure du corps creux (11).

3. Ecrou (1) selon l'une des revendications 1 et 2, caractérisé en ce que le prolongement (16) présente sur son côté intérieur un saillie, en particulier une nervure (16a) s'étendant axialement, qui provoque un guidage du boulon fileté.

4. Ecrou (1) selon l'une des revendications 1 à 3, caractérisé en ce que la ou les saillie(s) (12) se présente(nt) à la manière d'un anneau conique, éventuellement subdivisé plusieurs fois.

5. Ecrou (1) selon l'une des revendications 1 à 4, caractérisé en ce que la ou les saillie(s) (12) forme(nt) avec l'axe du corps creux (11), un angle de 10° à 50°, en particulier un angle d'environ 30°.

6. Ecrou (1) selon l'une des revendications 1 à 5, caractérisé en ce que la ou les saillie(s) (12) présente(nt) à l'extrémité libre (13), une nervure (14) à la manière d'une partie d'un filet.

7. Ecrou (1) selon l'une des revendications 1 à 6, caractérisé en ce que le bord libre de la ou les saillie(s) (12) s'étend le long d'une ligne hélicoïdale.

8. Ecrou (1) selon l'une des revendications 1 à 7, caractérisé en ce que l'épaisseur de la paroi de l'attache de la ou les saillie(s) (12) est nettement inférieure à son épaisseur de paroi et présente à peu près la moitié de l'épaisseur de paroi.

9. Ecrou (1) selon l'une des revendications 1 à 8, caractérisé en ce que les extrémités libres (13) des saillies (12) sont reliées entre elles au moyen d'une baguette interrompue en un point.

10. Ecrou (1) selon l'une des revendications 1 à 9, caractérisé en ce qu'il est réalisé dans une matière thermoplastique, une matière élastomère, une matière thermodurcissable, une matière synthétique renforcée aux fibres, une matière polymère renforcée avec des particules ou une matière polymère renforcée avec des particules ou des fibres.

11. Ecrou (1) selon la revendication 10, caractérisé en ce que les fibres sont disposées exclusivement ou de préférence dans la direction axiale.

12. Dispositif de fixation qui est constitué d'un boulon présentant un filetage et d'un écrou (1), l'écrou (1) étant formé par un composant présentant un perçage, au moins une saillie (12) dirigée obliquement vers l'axe, en particulier un anneau conique qui est réalisé d'une seule pièce avec le composant, dépassant vers l'intérieur à partir de la paroi intérieure du perçage et son bord libre coopérant avec le filetage du boulon, ce qui fait que le boulon fileté peut coulisser axialement dans un sens par rapport à l'écrou (1) par déformation élastique de l'élément d'encliquetage et peut tourner par rapport à l'écrou (1) et une force étant transmissible entre le boulon fileté et l'écrou (1), dans la direction axiale, caractérisé en ce que la ou les saillie(s) (12) présente(nt) un prolongement (16) dépassant axialement, qui s'étend à peu près jusque dans le plan de la surface d'application de l'écrou (1) sur un composant adjacent.

13. Dispositif de fixation selon la revendication 12, caractérisé en ce que le composant servant d'écrou (1) est conformé suivant l'une des revendications 1 à 11.
